# EUROPÄISCHE PATENTSCHRIFT

(11) **EP 2 989 273 B1**
(45) Veröffentlichungstag und Bekanntmachung des Hinweises auf die Patenterteilung: **18.09.2019**
(21) Anmeldenummer: 14700499.8
(22) Anmeldetag: 15.01.2014
(51) Int. Cl.: E05B 85/12, E05B 17/10, B60Q 3/267, B60Q 3/64

(54) **VORRICHTUNG MIT EINER GRIFFSCHALE UND MIT EINER BELEUCHTUNGSEINRICHTUNG FÜR DIE GRIFFSCHALE SOWIE EIN VERFAHREN ZUR MONTAGE DER VORRICHTUNG**
DEVICE WITH A HANDLE SHELL AND WITH AN ILLUMINATION MEANS FOR THE HANDLE SHELL, AND A METHOD FOR MOUNTING THE DEVICE
DISPOSITIF MUNI D'UNE COQUE DE POIGNÉE ET D'UN SYSTÈME D'ÉCLAIRAGE DE LA COQUE DE POIGNÉE, ET PROCÉDÉ DE MONTAGE DUDIT DISPOSITIF

(30) Priorität: 26.04.2013 DE 102013007383
(43) Veröffentlichungstag der Anmeldung: 02.03.2016
(73) Patentinhaber: Volkswagen Aktiengesellschaft, 38440 Wolfsburg (DE)
(72) Erfinder: FRANKE, Stefan, 38536 Seershausen (DE); LAMPERTZ, Sven, 29392 Wesendorf (DE); HEINZEL, Thorsten, 38442 Wolfsburg (DE); STUDENY, Christian, 38104 Braunschweig (DE); WITZKE, Herbert, 38442 Wolfsburg (DE)
(86) Internationale Anmeldenummer: PCT/EP2014/050671
(87) Internationale Veröffentlichungsnummer: WO 2014/173548

(56) Entgegenhaltungen:
- EP-A2- 1 110 822
- DE-U1-202008 005 174
- FR-A1- 2 892 075
- FR-A1- 2 908 806
- US-A- 3 916 250
- US-A1- 2013 003 404

## Beschreibung

Die Erfindung betrifft eine einer Türinnenverkleidung eines Kraftfahrzeugs zugeordnete Vorrichtung mit einer im Einbauzustand konkaven Griffschale, die zumindest einen transmissiven Bereich aufweist, und mit einer eine Lichtquelle aufweisenden Beleuchtungseinrichtung der Vorrichtung zur Einkopplung von Licht in den transmissiven Bereich. Weiterhin betrifft die Erfindung ein Verfahren zur Montage der Vorrichtung an einer Türinnenverkleidung eines Kraftfahrzeugs.

Eine derartige Vorrichtung zur Ausleuchtung eines die Türinnenbetätigung umfassenden Bereichs der Griffschale in der Türinnenverkleidung sowie ein hierzu geeignetes Montageverfahren sind in der Praxis bereits vielfach im Einsatz und zählen daher durch offenkundige Vorbenutzung zum Stand der Technik.

Die Türinnenbetätigung umfasst ein zum Entriegeln des Schließsystems der Tür bestimmtes Innenbetätigungselement, welches üblicherweise als Schwenkhebel ausgeführt ist. Um eine Fehlbetätigung zu vermeiden, ist dem Schwenkhebel eine im Wesentlichen mit den umgebenen Bereichen der Türinnenverkleidung konturbündige Ruheposition zugeordnet.

Die Griffschale ist dementsprechend ergonomisch so ausgeformt, dass der Schwenkhebel mit einem oder mehreren Fingern umgriffen und in den Fahrzeuginnenraum hinein verschwenkt werden kann. Die Griffschale kann dabei zugleich das Lager für den Schwenkhebel bilden.

Die Griffschale mit dem Innenbetätigungshebel ist an der Innenseite einer Kraftfahrzeugtür und vorzugsweise in der Türinnenverkleidung fixiert. Dazu ist bei den bekannten Griffschalen eine Montagehalterung mit einer Befestigungsöffnung vorgesehen, durch die zum Befestigen der Griffschale an der Türinnenverkleidung beispielsweise eine Schraube hindurchführbar ist. Die Montageöffnung ermöglicht folglich eine Montage durch die Griffschale hindurch.

Die Beleuchtungseinrichtung wird vor der Montage der Griffschale an der für den Betrachter nicht sichtbaren Rückseite der Griffschale so angebracht, dass das von der Lichtquelle, beispielsweise einer Leuchtdiode abgestrahlte Licht in den transmissiven Bereich der Griffschale gleichsam einem Beleuchtungsfenster einstrahlt.

Aus der DE 20 2005 003 591 U1 ist eine solche Griffschale für einen Innenbetätigungshebel einer Kraftfahrzeugtür bekannt. Eine Abdeckkappe für die Montageöffnung in der Griffschale ist dabei als ein beispielsweise im Zwei-Komponenten-Kunststoffspritzguss hergestelltes transparentes Beleuchtungsfenster ausgeführt. Der Abdeckkappe ist rückseitig der Lichtleitsteg angeformt, an den die Lichtquelle, beispielsweise eine LED, angeschlossen ist. Die Befestigung der Griffschale an der Türinnenverkleidung erfolgt in der oben beschriebenen Weise durch die Griffschale hindurch. Somit erfolgt durch die Abdeckkappe hindurch eine hinreichende Beleuchtung des Innenbereichs der Griffschale.

Die DE 10 2010 050 183 A1 betrifft eine Kraftfahrzeugtür mit einer Griffschale. Zur einfachen Beleuchtung ist im Bereich der Griffschale eine Beleuchtungseinrichtung angeordnet, die einen von einer Lichtquelle gespeisten Lichtleiter aufweist, der so ausgebildet ist, dass das von der Lichtquelle in den Lichtleiter eingekoppelte Licht teilweise in die Griffschale austritt.

Bei einer Anordnung gemäß der DE 10 2005 041 198 A1 ist eine Lichtquelle zur Beleuchtung eines Türgriffs vorgesehen, wobei zumindest ein Abschnitt des Türgriffs aus einem transparenten Material besteht und der mit einer dünnen, farbgebenden, schwach lichtdurchlässigen Schicht überzogen ist und wobei die Lichtquelle im Bereich des transparenten Abschnitts angeordnet ist. Im Bereich des transparenten Materials ist eine Lichtquelle in den Türgriff integriert. Der Entriegelungshebel wird dadurch als leuchtender Körper wahrgenommen.

Die DE 10 2006 031 668 A1 betrifft eine Kraftfahrzeugtür mit einer Türinnenbetätigung zur Türentriegelung und mit einer mindestens ein Leuchtmittel aufweisenden Beleuchtungseinrichtung. Zweckmäßig weist die Türinnenbetätigung eine Griffschale auf, wobei die Beleuchtungseinrichtung benachbart zu dieser Griffschale angeordnet ist. Ein Durchbruch in der Griffschale erzeugt somit eine indirekte Beleuchtung der Griffschale, der auch von einer farbigen, transparenten Folie verschlossen sein kann. Die Beleuchtungseinrichtung ist schwenkverstellbar zwischen einer Einfahrposition und einer Ausfahrposition an der Kraftfahrzeugtür gelagert. In der Einfahrposition beleuchtet die Beleuchtungseinrichtung zumindest einen Teil der Türinnenbetätigung, während sie in ihrer Ausfahrposition einen Innenraum des Kraftfahrzeugs beleuchtet.

In der US 2013/003404 A1 ist eine einer Türinnenverkleidung zugeordnete Vorrichtung bekannt, mit einer konkaven Griffschale und einer eine Lichtquelle aufweisenden Beleuchtungseinrichtung. Die Beleuchtungseinrichtung dient zum Beleuchten des Innenraums der Griffschale sowie zum Beleuchten einer Schalterbasis in einer unterhalb der Griffschale befindlichen Armlehne. Die Beleuchtungseinrichtung ist über Rastmittel lösbar mit der Griffschale verbunden.

Weiterhin offenbart EP 1 110 822 A2 eine einer Türinnenverkleidung eines Kraftfahrzeugs zugeordnete Vorrichtung mit einer Griffschale und eine separate Beleuchtungseinrichtung, wobei die Beleuchtungseinrichtung mehrere Komponenten der Türinnenverkleidung beleuchtet.

Aus der FR 2 908 806 A1 ist eine einer Türinnenverkleidung eines Kraftfahrzeugs zugeordnete Vorrichtung mit einer konkaven Griffschale bekannt. Die Griffschale bildet mit einem Greiforgan eine Betätigungs-Baugruppe und weist einen transmissiven Bereich auf, durch das Licht einer Beleuchtungseinrichtung zur Beleuchtung einer Kavität der Griffschale hindurchtreten kann. Die Beleuchtungseinrichtung ist Bestandteil einer Betätigungsübertragungs-Baugruppe, die zwecks Öffnung eines Türschlosses eine Betätigung des Greiforgans auf ein Zugkabel überträgt. Gleichzeitig dient die Betätigungsübertragungs-Baugruppe auch zur Stromversorgung der Beleuchtungseinrichtung über ein Stromkabel, welches um das Zugkabel gewickelt ist. Die genannten Baugruppen sind aneinander montiert.

Vor diesem Hintergrund liegt der Erfindung die Aufgabe zugrunde, eine Vorrichtung zu schaffen, die wesentlich einfacher zu montieren ist. Weiterhin liegt der Erfindung die Aufgabe zugrunde, ein hierfür geeignetes Montageverfahren zu schaffen.

Die erstgenannte Aufgabe wird gelöst mit einer Vorrichtung gemäß den Merkmalen des Patentanspruchs 1. Die Unteransprüche betreffen besonders zweckmäßige Weiterbildungen der Erfindung.

Erfindungsgemäß ist also eine Vorrichtung vorgesehen, bei welcher die Griffschale und die Beleuchtungseinrichtung als separate Bauelemente ausgeführt, die jeweils mit einem Fixiermittel ausgestattet sind und zwischen sich eine Freistrecke für das in den transmissiven Bereich einkoppelbare Licht bilden. Die Erfindung geht dabei davon aus, dass die Montage dadurch wesentlich vereinfacht werden kann, dass die Beleuchtungseinrichtung unabhängig von der Griffschale an der Türinnenverkleidung oder sonstigen Haltervorrichtungen der Kraftfahrzeugtür, insbesondere in separaten Arbeitsgängen montierbar ist. Erfindungsgemäß ist hierzu die Beleuchtungseinrichtung als eine separate, mit der Griffschale nicht verbundene Bau- und Funktionseinheit ausgeführt und kann daher einschließlich der zugeordneten, insbesondere elektrischen Leitungen oder Lichtleitern in einem rückwärtigen, später für den Betrachter nicht einsehbaren Bereich der Fahrzeugtür, beispielsweise auch bereits vor der Montage der Türinnenverkleidung fixiert und angeschlossen werden. Diese räumliche und funktionale Trennung wird erfindungsgemäß durch eine Freistrecke für das abgestrahlte Licht erreicht, die es erlaubt, das von der Lichtquelle abgestrahlte Licht mit nur sehr geringen Streuverlusten rückseitig in den transmissiven Bereich einzukoppeln. Durch diese Funktionentrennung entfällt die Haltefunktion an der Griffschale für die Beleuchtungsvorrichtung, sodass diese im Wesentlichen lediglich als Abdeckung dient und daher dem Wunsch nach einem möglichst dekorativen Erscheinungsbild folgen kann. Weil erfindungsgemäß die Montage der Beleuchtungseinrichtung bereits vor der Montage der Türinnenverkleidung erfolgen kann, ist es zudem nicht erforderlich, in der Türinnenverkleidung wie beim Stand der Technik eine an die Abmessungen der Beleuchtungseinrichtung abgestimmte Montageöffnung vorzusehen. Vielmehr ist lediglich eine vergleichsweise kleine Durchlassöffnung in der Freistrecke zwischen der Beleuchtungseinrichtung und dem transmissiven Bereich der Griffschale erforderlich, sodass der Gestaltungsspielraum für die Griffschale wesentlich erweitert wird.

Eine besonders vorteilhafte Ausgestaltung der vorliegenden Erfindung wird dann erreicht, wenn die Beleuchtungseinrichtung einen Lichtleiter mit einer einstellbaren Lichtaustrittsfläche für das Licht hat, die zur Formung des in die Freistrecke austretenden Lichtstrahls ausgeführt ist.

Hierdurch ist es problemlos möglich, den austretenden Lichtstrahl auf eine Sollposition des transmissiven Bereichs der in einem nachfolgenden Montageschritt zu montierenden Griffschale zu richten bzw. zu fokussieren. Zur Justierung der Beleuchtungseinrichtung dient beispielsweise eine Schablone oder eine Lehre, auf der der Lichtstrahl bei einem ersten Funktionstest eine gewünschte Abbildung erzeugt.

Zu diesem Zweck kann es zudem besonders vorteilhaft sein, wenn der Lichtleiter zumindest abschnittsweise elastische Eigenschaften aufweist und daher die Beleuchtungseinrichtung bei unterschiedlichen Fahrzeugtypen und -modellen einsetzbar ist. Auf diese Weise wird zugleich die Teilevielfalt reduziert. Zudem kann die gleiche Beleuchtungseinrichtung sowohl auf der linken wie auch auf der rechten Fahrzeugseite in der vorderen oder der hinteren Tür verwendet werden.

Wenn die Lichtaustrittsfläche der Beleuchtungseinrichtung eine Fokussieroptik oder eine Kollimieroptik aufweist und gegebenenfalls ergänzend eine Vorformung des Strahlquerschnitts im Lichtleiter der Beleuchtungseinrichtung erfolgt, tritt der Lichtstrahl aus dem Lichtleiter als gleichmäßig gerichteter Strahl aus, der erst nach dem Eintritt in den transmissiven Bereich in vorbestimmter Weise gestreut wird.

Der transmissive bzw. transluzente Bereich könnte transparent ausgeführt sein, um so mögliche Verluste der Lichtleistung zu reduzieren. Besonders vorteilhaft ist es hingegen auch, wenn der transmissive Bereich opake Eigenschaften hat. Hierdurch wird ein gleichmäßiger Lichtaustritt erreicht, bei dem insbesondere lokale Helligkeitsunterschiede weitgehend vermieden werden können. Die Ausleuchtung der Griffschale wird dadurch wesentlich optimiert.

Der transmissive Bereich könnte als ein mit der Griffschale verbundenes, in diese konturbündig einsetzbares Bauteil ausgeführt sein. Besonders praxisgerecht ist hingegen eine Abwandlung der vorliegenden Erfindung, bei welcher der transmissive Bereich einstückig bzw. einteilig mit der Griffschale ausgeführt ist. Indem die Griffmulde beispielsweise im Zwei-Komponenten-Spritzgussverfahren gefertigt ist, bei dem eine erste Komponente den transmissiven Bereich und eine zweite Komponenten den übrigen, lichtundurchlässigen Teil der Griffschale bildet, wird ein einfacher und schnell montierbarer konstruktiver Aufbau realisiert. Insbesondere werden auf diese Weise Montagefehler weitgehend vermieden.

Bei einer anderen, ebenfalls besonders Erfolg versprechenden Abwandlung der vorliegenden Erfindung ist der transmissive Bereich an seiner Lichteintrittsfläche oder Lichtaustrittsfläche zumindest abschnittsweise mit einer optischen Strukturierung, insbesondere mit einer Streuscheibe oder einer Narbung ausgestattet.
Hierdurch wird eine optimale Streuung des in der Freistrecke im Wesentlichen gerichteten Lichtstrahls an der Lichteintrittsfläche oder Lichtaustrittsfläche erreicht, um so eine optimale Beleuchtung der Griffschale sowie des innerhalb der Griffschale angeordneten Betätigungselements zu erreichen. Zudem wird durch die Strukturierung vermieden, dass der Betrachter insbesondere bei ausgeschalteter Beleuchtung durch den transmissiven Bereich hindurch rückwärtige Bereiche der Türinnenverkleidung erkennen kann.

Zu diesem Zweck eignet sich in besonderer Weise eine Ausgestaltung der vorliegenden Erfindung, bei welcher die Lichteintrittsfläche oder die Lichtaustrittsfläche durch eine Schicht oder eine Abdeckscheibe gebildet ist. Bei einer einfachen Ausführung ist hierzu die Abdeckscheibe mittels einer Adhäsionsverbindung mit der Rückseite des transmissiven Bereichs verbunden, um so die gewünschte Streuwirkung zu erreichen, sodass der transmissive Bereich auf der für den Betrachter sichtbaren Seite der Griffschale transparent erscheint und dadurch ein für den Betrachter besonders hochwertiges Erscheinungsbild realisiert werden kann.

Bei einer anderen, ebenfalls besonders Erfolg versprechenden Abwandlung der Erfindung ist das Fixiermittel der Beleuchtungseinrichtung zur Fixierung insbesondere mittels einer Schnellfixierung an einem mittels der Türinnenverkleidung verschließbaren Innenbereich der Tür des Kraftfahrzeugs ausgeführt. Hierzu eignet sich insbesondere eine Clipverbindung, durch welche die Beleuchtungseinrichtung an der Tür in einem für den Betrachter später nicht mehr einsehbaren Bereich fixierbar ist. Hierdurch kann also die Fixierung der Beleuchtungseinrichtung unabhängig, insbesondere im Montageprozess bereits vor der Anordnung der Türinnenverkleidung durchgeführt werden.

Durch die Anordnung der Griffschale an einer Türinnenverkleidung und der Beleuchtungseinrichtung in einem von der Türverkleidung abdeckbaren Bereich der Tür, insbesondere an einem Strukturelement der Fahrzeugtür derart, dass der von der Beleuchtungseinrichtung gerichtet abgegebene Lichtstrahl eine Querschnittsform aufweist, die im Wesentlichen der Lichteintrittsfläche des Bereichs der Griffschale entspricht oder gegebenenfalls geringfügig kleiner ist, wird es erstmals möglich, die Montage der Griffschale einerseits und der Beleuchtungseinrichtung andererseits zu trennen. Somit kann die Beleuchtungseinrichtung zu einem früheren Zeitpunkt in dem Montageprozess funktionsbereit an der Türinnenseite angebracht werden, während die Türinnenverkleidung in einem späteren Montageschritt als Abdeckung an der Tür fixiert wird, wobei insbesondere eine elektrische Kontaktierung entfällt.

Die zweitgenannte Aufgabe, ein Verfahren zur Montage einer zur Beleuchtung einer Griffschale in einer Türinnenverkleidung eines Kraftfahrzeugs bestimmten Vorrichtung wie im Anspruch 1 definiert zu schaffen, wird erfindungsgemäß dadurch gelöst, dass in einem ersten Arbeitsschritt die Beleuchtungseinrichtung in einem für den Fahrzeuginsassen nicht sichtbaren, von der Türinnenverkleidung abdeckbaren Bereich der Tür, insbesondere mittels eines Schnellverschlusses fixiert wird und dass in einem nachfolgenden zweiten Arbeitsschritt die Griffschale unabhängig von der Beleuchtungseinrichtung zu dieser örtlich beabstandet in einer hierfür vorgesehenen Ausnehmung der Türinnenverkleidung fixiert wird. Hierdurch wird eine Unterteilung in einzelne, separate Montageschritte realisiert, die entgegen dem Vorurteil in der Fachwelt, nach dem die Zusammenfassung von Montageschritten angestrebt wird, zu einer wesentlichen Vereinfachung des Montageprozesses führen. Insbesondere können so später nicht mehr zugängliche rückwärtige Bereiche der Türinnenverkleidung oder der Tür zur Fixierung der Beleuchtungseinrichtung genutzt werden, die entsprechend mit den erforderlichen Leitungsanschlüssen versehen werden kann. Bei der späteren Montage der Griffschale, die dadurch beispielsweise auch ein integraler Bestandteil der Türinnenverkleidung sein kann, ist eine Verbindung mit der Beleuchtungseinrichtung hingegen nicht mehr erforderlich, weil zwischen dieser und dem transmissiven Bereich der Griffschale eine Freistrecke für das im Betrieb zuzuführende Licht vorgesehen ist. Insbesondere entfällt also die in der Praxis nach dem Stand der Technik umständliche Montage der Beleuchtungseinrichtung im rückwärtigen Bereich der Türinnenverkleidung und die hierfür erforderliche Montageöffnung bzw. Fixierstelle.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1: einen Abschnitt einer Türinnenverkleidung eines Kraftfahrzeugs mit einer Beleuchtungseinrichtung und einer Griffschale aus einer rückwärtigen Ansicht;
- Fig. 2a: eine Abfolge der Verfahrensschritte bei der Montage der in Figur 1 gezeigten
- bis 2c: Beleuchtungseinrichtung und der Griffschale.

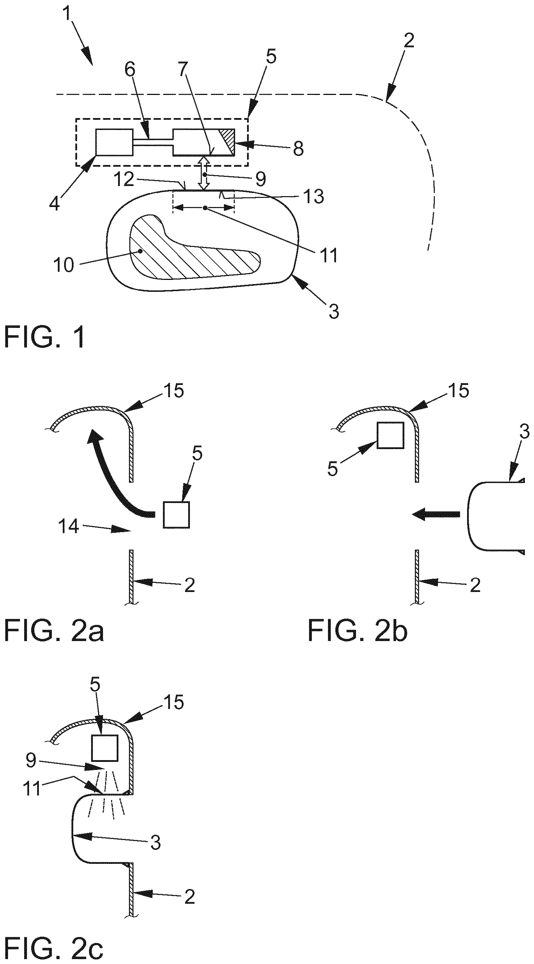

Figur 1 zeigt lediglich beispielhaft eine Vorrichtung 1 umfassend eine an einer Türinnenverkleidung 2 eines nicht weiter dargestellten Kraftfahrzeugs fixierte Griffschale 3 sowie eine eine Lichtquelle 4 aufweisende Beleuchtungseinrichtung 5.

Die Beleuchtungseinrichtung 5 umfasst dabei neben der beispielsweise durch eine LED gebildeten Lichtquelle 4 einen Lichtleiter 6 mit einer nach unten gerichteten Lichtaustrittsfläche 7 für das Licht. Das in den Lichtleiter 6 eingekoppelte Licht trifft vor der Auskopplung auf ein stirnseitig, gegenüber der Querschnittsebene des Lichtleiters 6 geneigt angeordnetes Reflexionselement 8, welches zugleich der Strahlformung des austretenden Lichtstrahls dient. Insbesondere wird dadurch eine unerwünschte Streuung des Lichts im Bereich der Freistrecke 9 zwischen der Lichtaustrittsfläche 7 und der Griffschale 3 wesentlich vermindert. Die konkave, zur Aufnahme eines schwenkbeweglichen Betätigungselements 10 bestimmte Griffschale 3 hat zur Lichteinkopplung einen transmissiven Bereich 11, der im Zweikomponenten-Spritzgussverfahren als integraler Bestandteil der Griffschale 3 ausgeführt ist. Indem der durch die Freistrecke 9 zugeführte Lichtstrahl im Betrieb in eine Lichteintrittsfläche 12 des transmissiven Bereichs 11 eingekoppelt bzw. fokussiert wird, werden Streuverluste weitgehend vermieden. Um eine gleichmäßige Ausleuchtung der Griffschale 3 zu realisieren, ist eine Lichtaustrittsfläche 13 des transmissiven Bereichs 11 als Streuscheibe ausgeführt. Der besondere Vorteil der erfindungsgemäßen Vorrichtung 1 ist vor allem in der Funktionentrennung zu sehen, die es erstmals ermöglicht, die Beleuchtungseinrichtung 5 und die Griffschale 3 als separate Funktionseinheiten und unabhängig voneinander zu montieren. Insbesondere kann die Beleuchtungseinrichtung 5 dadurch auch in solchen Bereichen der nicht dargestellten Fahrzeugtür angeordnet werden, die nach der Montage der Türinnenverkleidung 2 unzugänglich sind.

Die Montage wird nachstehend noch anhand der Figuren 2a bis 2c näher erläutert. Wie in Figur 2a zu erkennen, wird dabei zunächst die Beleuchtungseinrichtung 5 durch eine Ausnehmung 14 in der Türinnenverkleidung 2 hindurch in den Türinnenraum eingebracht und an einer für den Betrachter nicht sichtbaren Rückseite einer Türbrüstung 15 mittels eines nicht gezeigten Schnellverschlusses dauerhaft fixiert und an die ebenfalls nicht gezeigten Versorgungsleitungen angeschlossen. Die Funktionsbereitschaft der Beleuchtungseinrichtung 5 ist somit bereits erreicht.

Anschließend wird, wie in Figur 2b zu erkennen, die Griffschale 3 in die Ausnehmung 14 eingesetzt, die dort beispielsweise durch eine Rastverbindung fixierbar ist.

Wie andeutungsweise in Figur 2c zu erkennen, strahlt im Betrieb der Vorrichtung 1 das von der Lichtquelle 4 der Beleuchtungseinrichtung 5 durch die Freistrecke 9 abgegebene Licht exakt in den transmissiven Bereich 11 der Griffschale 3 ein. Die Lichtaustrittsfläche 13 ist mit einer nicht gezeigten, als Streuscheibe wirkenden Strukturierung versehen, sodass eine gleichmäßige Lichtverteilung in der Griffschale 3 erreicht wird.

## Patentansprüche

1. Eine einer Türinnenverkleidung (2) eines Kraftfahrzeugs zugeordnete Vorrichtung (1) mit einer konkaven Griffschale (3), die zumindest einen transmissiven Bereich (11) aufweist, und mit einer insbesondere eine Lichtquelle (4) aufweisenden Beleuchtungseinrichtung (5) der Vorrichtung (1) zur Einkopplung von Licht in den transmissiven Bereich (11), **dadurch gekennzeichnet, dass** die Griffschale (3) und die Beleuchtungseinrichtung (5) als separate Bauelemente ausgeführt und jeweils mit einem Fixiermittel ausgestattet sind, wobei die Beleuchtungsvorrichtung (5) als eine separate, mit der Griffschale (3) nicht verbundene Bau- und Funktionseinheit ausgeführt ist und dass die Griffschale (3) und die Beleuchtungseinrichtung (5) zwischen sich eine Freistrecke (9) für das in den transmissiven Bereich (11) einkoppelbare Licht einschließen.

2. Vorrichtung (1) nach Anspruch 1, **dadurch gekennzeichnet, dass** die Beleuchtungseinrichtung (5) einen Lichtleiter (6) mit einer insbesondere einstellbaren Lichtaustrittsfläche (7) für das Licht aufweist.

3. Vorrichtung (1) nach den Ansprüchen 1 oder 2, **dadurch gekennzeichnet, dass** der Lichtleiter (6) zur Strahlformung des in die Freistrecke (9) austretenden Lichtstrahls ausgeführt ist.

4. Vorrichtung (1) nach zumindest einem der vorangehenden Ansprüche, **dadurch gekennzeichnet, dass** der transmissive Bereich (11) opake Eigenschaften hat.

5. Vorrichtung (1) nach zumindest einem der vorangehenden Ansprüche, **dadurch gekennzeichnet, dass** der transmissive Bereich (11) einstückig oder einteilig mit der Griffschale (3) ausgeführt ist.

6. Vorrichtung (1) nach zumindest einem der vorangehenden Ansprüche, **dadurch gekennzeichnet, dass** der transmissive Bereich (11) an seiner Lichteintrittsfläche (12) und/oder seiner Lichtaustrittsfläche (13) zumindest abschnittsweise eine optische Strukturierung, insbesondere eine Streuscheibe oder eine Narbung aufweist.

7. Vorrichtung (1) nach Anspruch 6, **dadurch gekennzeichnet, dass** die Lichteintrittsfläche (12) und/oder die Lichtaustrittsfläche (13) durch eine Schicht oder eine Abdeckscheibe gebildet ist.

8. Vorrichtung (1) nach zumindest einem der vorangehenden Ansprüche, **dadurch gekennzeichnet, dass** das Fixiermittel der Beleuchtungseinrichtung (5) zur Fixierung insbesondere mittels einer Schnellfixierung an der Türinnenverkleidung (2) ausgeführt ist.

9. Vorrichtung (1) nach zumindest einem der vorangehenden Ansprüche, **dadurch gekennzeichnet, dass** die Beleuchtungseinrichtung (5) eine Fokussieroptik oder eine Kollimieroptik aufweist.

10. Verfahren zur Montage einer zur Beleuchtung einer Griffschale (3) in einer Türinnenverkleidung (2) eines Kraftfahrzeugs bestimmten Vorrichtung (1) nach zumindest einem der vorangehenden Ansprüche, **dadurch gekennzeichnet, dass** in einem ersten Arbeitsschritt die Beleuchtungseinrichtung (5) an einer für den Fahrzeuginsassen nicht sichtbaren Rückseite der Türinnenverkleidung (2) oder an der Fahrzeugtür, insbesondere mittels eines Schnellverschlusses fixiert wird, und dass in einem nachfolgenden zweiten Arbeitsschritt die Griffschale (3) unabhängig von der Beleuchtungseinrichtung (5) zu dieser örtlich beabstandet in einer hierfür vorgesehenen Ausnehmung (14) der Türinnenverkleidung (2) fixiert wird.

## Claims

1. A device (1) assigned to an interior door panel (2) of a motor vehicle with a concave handle shell (3), which has at least one transmissive region (11), and with an illuminating means (5) of the device (1) having in particular a light source (4) for coupling light into the transmissive region (11), **characterized in that** the handle shell (3) and the illuminating means (5) are designed as separate components and in each case are equipped with a fixing means, wherein the illuminating means (5) is designed as a separate, structural and functional unit not connected to the handle shell (3) and that the handle shell (3) and the illuminating means (5) include a free distance (9) between them for the light which can be coupled into the transmissive region (11).

2. The device (1) according to Claim 1, **characterized in that** the illuminating means (5) has a light guide (6) with an in particular adjustable light exit surface (7) for the light.

3. The device (1) according to Claim 1 or 2, **characterized in that** the light guide (6) is designed for forming the beam of the light beam exiting into the free distance (9).

4. The device (1) according to at least one of the preceding claims, **characterized in that** the transmissive region (11) has opaque properties.

5. The device (1) according to at least one of the preceding claims, **characterized in that** the transmissive region (11) is constructed in one piece or integrally with the handle shell (3).

6. The device (1) according to at least one of the preceding claims, **characterized in that** the transmissive region (11) on its light entry surface (12) and/or its light exit surface (13) at least in sections has an optical structuring, in particular a diffusing screen or a grain.

7. The device (1) according to Claim 6, **characterized in that** the light entry surface (12) and/or the light exit surface (13) is formed by a layer or a cover disc.

8. The device (1) according to at least one of the preceding claims, **characterized in that** the fixing means of the illuminating means (5) is designed for fixing in particular by means of a rapid fixing to the interior door panel (2).

9. The device (1) according to at least one of the preceding claims, **characterized in that** the illuminating means (5) has a focusing or collimating optics.

10. A method for mounting a device (1) intended for the illumination of a handle shell (3) in an interior door panel (2) of a motor vehicle according to at least one of the preceding claims, **characterized in that** in a first work step the illuminating means (5) is fixed on a rear side of the interior door panel (2) not visible to the vehicle occupant or on the vehicle door, in particular is fixed by means of a quick-action closure, and that in a subsequent second work step the handle shell (3) is fixed independently of the illuminating means (5) locally spaced apart therefrom in a recess (14) of the interior door panel (2) provided for this purpose.

## Revendications

1. Dispositif (1) correspondant à une garniture interne de portière (2) d'un véhicule automobile, avec une coque de préhension concave (3), qui comprend au moins une zone transmissive (11) et avec un dispositif d'éclairage (5), comprenant plus particulièrement une source de lumière (4), du dispositif (1) pour l'entrée de lumière dans la zone transmissive (11), **caractérisé en ce que** la coque de préhension (3) et le dispositif d'éclairage (5) sont conçus comme des composants séparés et sont équipés chacun d'un moyen de fixation, le dispositif d'éclairage (5) étant conçu comme une unité structurelle et fonctionnelle séparée non reliée à la coque de préhension (3) et **en ce que** la coque de préhension (3) et le dispositif d'éclairage (5) forment entre eux une trajectoire libre (9) pour la lumière entrant dans la zone transmissive (11).

2. Dispositif (1) selon la revendication 1, **caractérisé en ce que** le dispositif d'éclairage (5) comprend une fibre optique (6) avec une surface de sortie de lumière (7), plus particulièrement réglable, pour la lumière.

3. Dispositif (1) selon les revendications 1 ou 2, **caractérisé en ce que** la fibre optique (6) est conçue pour la formation du rayon lumineux sortant vers la trajectoire libre (9).

4. Dispositif (1) selon au moins l'une des revendications précédentes, **caractérisé en ce que** la zone transmissive (11) présente des propriétés opaques.

5. Dispositif (1) selon au moins l'une des revendications précédentes, **caractérisé en ce que** la zone transmissive (11) est réalisée d'une seule pièce ou d'un seul tenant avec la coque de préhension (3).

6. Dispositif (1) selon au moins l'une des revendications précédentes, **caractérisé en ce que** la zone transmissive (11) comprend, au niveau de sa surface d'entrée de lumière (12) et/ou de sa surface de sortie de lumière (13) au moins à certains endroits une structure optique, plus particulièrement un diffuseur ou un grain.

7. Dispositif (1) selon la revendication 6, **caractérisé en ce que** la surface d'entrée de lumière (12) et/ou la surface de sortie de lumière (13) est constituée d'une couche ou d'un disque de recouvrement.

8. Dispositif (1) selon au moins l'une des revendications précédentes, **caractérisé en ce que** le moyen de fixation du dispositif d'éclairage (5) est conçu pour la fixation, plus particulièrement, au moyen d'une fixation rapide, à la garniture interne de portière (2).

9. Dispositif (1) selon au moins l'une des revendications précédentes, **caractérisé en ce que** le dispositif d'éclairage (5) comprend une optique de focalisation ou une optique de collimation.

10. Procédé de montage d'un dispositif (1) conçu pour l'éclairage d'une coque de préhension (3) dans une garniture interne de portière (2) d'un véhicule automobile, selon au moins l'une des revendications précédentes, **caractérisé en ce que**, dans une première étape, le dispositif d'éclairage (5) est fixé à un côté arrière, non visible par les passagers du véhicule, de la garniture interne de portière (2) ou à la portière du véhicule, plus particulièrement au moyen d'une fixation rapide et **en ce que**, dans une deuxième étape, la coque de préhension (3) est fixée, indépendamment du dispositif d'éclairage (5), localement à une certaine distance de celle-ci, dans un évidement (14), prévu à cet effet, dans la garniture interne de la portière (2).
